**Europäisches Patentamt**

**European Patent Office**

**Office européen des brevets**

(19)

(11) Veröffentlichungsnummer: **0 1 1 3 060**
**B2**

(12) ## NEUE EUROPÄISCHE PATENTSCHRIFT

(45) Veröffentlichungstag der neuen Patentschrift:
**12.04.89**

(51) Int. Cl.⁴: **C 02 F 5/08, C 23 G 1/02**

(21) Anmeldenummer: **83112059.7**

(22) Anmeldetag: **01.12.83**

(54) Verfahren zur Entfernung von manganhaltigen Inkrustationen aus zur Wasserversorgung betriebenen Einrichtungen.

| | |
|---|---|
| Verbunden mit 83903530.0/0127635 (europäische Anmeldenummer/Veröffentlichungsnummer) durch Entscheidung vom 06.08.85. | (73) Patentinhaber: R. Späne GmbH & Co. KG, Schafmatt 5, D-7888 Rheinfelden (DE) |
| (30) Priorität: **01.12.82 DE 3244443** | (72) Erfinder: **Späne, Rainer, Kreisstrasse 38, D-7888 Rheinfelden (DE)** Erfinder: **Kötzsch, Thomas, Fécampring 28, F-7888 Rheinfelden (DE)** |
| (43) Veröffentlichungstag der Anmeldung: **11.07.84 Patentblatt 84/28** | |
| (45) Bekanntmachung des Hinweises auf die Patenterteilung: **29.10.86 Patentblatt 86/44** | (74) Vertreter: **Andrae, Steffen, Dr. et al, Patentanwälte Andrae, Flach, Haug, Kneissl Steinstrasse 44, D-8000 München 80 (DE)** |
| (45) Bekanntmachung des Hinweises auf die Entscheidung über den Einspruch: **12.04.89 Patentblatt 89/15** | |
| (84) Benannte Vertragsstaaten: **AT BE CH DE FR IT LI LU NL** | |

(56) Entgegenhaltungen:
DE-A- 2 364 162
DE-A- 2 520 988
FR-A- 2 034 005
FR-A- 2 065 380
JP-A-25 075 480
US-A- 3 682 702

Kittner e.A. "Wasserversorgung", 4. Aufl. (1977), S. 159-167 "Vom Wasser", 55. Band (1980), S: 159-177
Chem. Abstr. 88: 199820n (1978)
Corrosion Australasia, Vol. 2 (1977), S. 12-15
Remy "Lehrbuch der anorganischen Chemie" 10. Aufl. 1959, Bd II, S. 256-257

(56) Entgegenhaltungen: (Fortsetzung)
Chem. Abstr. 85: 194626q (1976)
Chem. Abstr. 89: 113116y (1978)
Holleman-Wiberg, 81 Aufl. (1976), S. 299-300
Römpps Chemie Lexikon, 7. Aufl. Bd. 4, S. 2283

**Die Akte enthält technische Angaben, die nach dem Eingang der Anmeldung eingereicht wurden und die nicht in dieser Patentschrift enthalten sind.**

EP 0 113 060 B2

ACTORUM AG

## Beschreibung

Gegenstand der Erfindung sind ein Verfahren zur Entfernung von insbesondere calcium-, eisen- und manganhaltigen Inkrustationen aus Einrichtungen der Wasserversorgung.

Bekanntlich bedürfen die technischen Einrichtungen für Brauch- und Trinkwasser in gewissen Zeitabständen der gründlichen Reinigung von Belägen, die das aus den natürlichen Quellen gewonnene Wasser ständig aus seinen gelöst enthaltenen Inhaltsstoffen aufbaut. Es handelt sich dabei häufig um eisen-, kalk- und manganhaltige Ablagerungen teils in carbonatischer, teils in oxidischer Form, sogenannte Verockerungen und Versinterungen, an deren Entstehung auch Bodenbakterien, insbesondere die in fast allen Bodenarten vorkommenden, als Eisen- und Manganbakterien bekannten Mikroorganismen beteiligt sind. Solche Inkrustationen besitzen bei Alterung und besonders mit steigendem Mangangehalt oft eine erhebliche mechanische und chemische Widerstandsfähigkeit.

Reinhaltungsversuche mit elementarem Chlor, wie es im Trinkwasser zur Entkeimung üblich ist, scheiterten ebenso wie die Versuche mit Mineralsäuren allein. Deshalb wurden auch schon mit besserer Aussicht auf ausreichende Reinigungseffekte Versuche mit organischen Säuren unternommen:

Während beispielsweise Milchsäure oder auch Ameisensäure merklich bessere, jedoch immer noch nicht ausreichende Reinigungseffekte erbrachten, wurden mit auf ca. 60°C erwärmten Zitronensäurelösungen in vielen Fällen relativ zufriedenstellende Reinigungsergebnisse erzielt. Leider ist die Anwendung erwärmter Lösungen für die Reinigung von beispielsweise Brunnen, Leitungen oder von Wänden von Trinkwasserreservoires wenig praktikabel, weil die Wärme der Reinigungslösung durch die Umgebung ständig wieder verlorengeht.

Von den organischen Säuren führte lediglich Ascorbinsäure, gemäss DE-B 2 040 546, zu akzeptablen Ergebnissen bei Normaltemperatur. Jedoch werden besonders hartnäckige Inkrustationen, beispielsweise die knollenartigen Versinterungen, von Ascorbinsäure nicht gemeistert, selbst wenn grössere Mengen davon verwendet werden. Des weiteren ist ein allgemeiner Nachteil der Anwendung organischer Säuren die damit verbundene erhebliche Erhöhung des biologischen Sauerstoffbedarfs (BSB), so dass eine Ableitung solcher Reinigungslösungen in den Vorfluter auch nach der Neutralisation begreiflicherweise unzulässig ist. Ausserdem werden durch den oxidativen Abbau organischer Säuren zu Kohlendioxid die von ihnen gebundenen Kationen Eisen, Calcium und Mangan wieder frei für die Bildung erneuter Ausfällungen, was ebenfalls ein Nachteil ist.

Aus der DE-A 2 520 988 ist ferner ein Verfahren zur Entfernung von Kesselstein und/oder Schlamm bekannt. Diese Ablagerungen unterscheiden sich ihrem Charakter nach von den gemäss der vorliegenden Erfindung zu behandelnden Verockerungen und Versinterungen dadurch, dass sie kaum einen Eisengehalt und keinen Mangangehalt aufweisen. Bei dem Verfahren gemäss DE-A 2 520 988 erfolgt eine zweistufige Behandlung, bei der zuerst längere Zeit mit einer Säurelösung gespült oder behandelt wird, wonach man eine Behandlung mit einer reinen Wasserstoffperoxidlösung durchführt. Die Behandlung mit Säure dient der Lockerung des ursprünglichen Belags, so dass dieser porig wird, und die nachfolgende Behandlung mit Wasserstoffperoxid führt zu einem Aufsprengen des Belags dadurch, dass Wasserstoffperoxid in die Poren eindringt und an den scharfkantigen Oberflächen und/oder durch Spuren von Schwermetallen katalysiert zerfällt. Aufgrund der Natur der behandelten Ablagerungen laufen dabei keine Redoxreaktionen zwischen Ablagerung und Wasserstoffperoxid ab. Das Verfahren gemäss DE-A 2 520 988 hat den Nachteil, dass es zweistufig durchgeführt werden muss und ausserdem für die gemäss der vorliegenden Erfindung zu behandelnden manganhaltigen Inkrustationen wenig wirksam ist.

Es ist Aufgabe der vorliegenden Erfindung, ein Verfahren zur Entfernung von insbesondere manganhaltigen Inkrustationen aus zur Wasserversorgung betriebenen Einrichtungen anzugeben, das in einfacher Weise mit einer einzigen Lösung von Umgebungstemperatur durchgeführt werden kann und unter Verwendung billiger allgemein zugänglicher Grundbestandteile eine effektive Reinigung der Einrichtungen von derartigen Inkrustationen ermöglicht, ohne dass eine nennenswerte Erhöhung des biologischen Sauerstoffbedarfs im Vorfluter erhalten wird.

Diese Aufgabe wird durch ein Verfahren zur Entfernung von unter Beteiligung von Eisen- und Manganbakterien aus aus natürlichen Quellen gewonnenem Wasser aufgebauten eisen-, calcium- und manganhaltigen Verockerungen und/oder Versinterungen aus zur Wasserversorgung betriebenen Einrichtungen in Form von Brunnen, Leitungen und Trinkwasserreservoirs, gelöst, dadurch gekennzeichnet, dass man eine wässrige Lösung bereitet, die eine solche Menge Salzsäure, dass die Normalität der Lösung von 0,001 N bis 6 N beträgt, sowie Wasserstoffperoxid in einer Menge von 0,05 bis 20 Gew.-% enthält, und diese Lösung auf die verockerten und/oder versinterten Einrichtungen einwirken lässt.

Mineralsaure wässrige Lösungen, die Wasserstoffperoxid sowie ggf. auch Stabilisatoren und weitere Zusätze enthalten können, sind beispielsweise aus DE-A 2 364 162 und US-A 3 682 702 bekannt. Derartige Lösungen wurden bisher zum Beizen von Metallteilen bzw. zum Entfernen von auf Düsenmotoren abgesetztem Manganoxid verwendet. Diese Verwendungszwecke sind nicht mit der Reinigung von wasserführenden Rohren und Anlageteilen nahe verwandt. Die Beizung dient zur Beseitigung von dünnen Oxidhäutchen, während die gemäss der vorliegenden Erfindung zu behandelnden Inkrustationen aus Oxiden und Carbonaten geformt und wesentlich dikker sind. Der mit der Behandlung von Wasserversorgungseinrichtungen befasste Fachmann hat üblicherweise keinerlei Kenntnisse auf dem Gebiet der Behandlung von Düsenmotoren.

Selbstverständlich können die beiden Schritte des beschriebenen Verfahrens an unterschiedlichen Orten von unterschiedlichen handelnden Personen durchgeführt werden, so dass beispielsweise die Herstellung einer für das erfindungsgemässe Verfahren bestimmten Lösung von einem reinen Hersteller und die Verwendung dieser Lösung von einem Fachmann zur Behandlung von Wasserversorgungseinrichtungen als Durchführung des beanspruchten Verfahrens anzusehen ist.

Überraschend hat sich gezeigt, dass die eingangs geschilderten Schwierigkeiten bei der Entfernung von Verockerungen und Versinterungen aus zur Wasserversorung dienenden Einrichtungen überwunden werden, wenn man gemäss der vorliegenden Erfindung salzsaure, wässrige Wasserstoffperoxid-Lösungen verwendet. Die Anwendung dieser Lösungen führt bereits bei bemerkenswert geringen $H_2O_2$-Konzentrationen auf Ablagerungen der oben beschriebenen Art mit sofortigem und unerwartetem durchschlagendem Erfolg zur rückstandsfreien und gründlichen Reinigung verockerter und/oder versinterter Brunnen, Leitungen und Speicher. Selbst die gefürchteten knolligen und gealterten Inkrustationen werden dabei mühelos aufgeschlossen und gehen in Lösung. Besonders vorteilhaft erweist sich dabei, dass die erfindungsgemässen Lösungen durch einfaches Aufsprühen auf die inkrustierten Wände aufgebracht werden können. Dabei beobachtet man eine sofortige Entfärbung der dunklen Inkrustationen und deren Zerfall.

Ein weiterer sehr wesentlicher Vorteil der erfindungsgemässen salzsauren wässrigen Wasserstoffperoxid-Lösungen ist deren begleitende zuverlässige antiseptische und beispielsweise Schleimbefall und Algen beseitigende Wirkung. Die erfindungsgemässe Anwendung der wässrigsauren Hydroperoxidlösungen bewirkt somit gleichzeitig eine Sterilisation der behandelten Wasserversorgungseinrichtungen, so dass sich hierbei gegenüber den anderen Reinigungsmethoden nach dem bisherigen Stand der Technik der dort gegebenenfalls erforderliche zusätzliche Einsatz von Desinfektionsmitteln und gegebenenfalls anderen biocid wirkenden Stoffen erübrigt.

Ein weiterer, jedoch ganz besonderer Vorteil der Erfindung liegt in der Tatsache, dass durch die Verwendung von Wasserstoffperoxid, das bei seinen Reaktionen letztlich Wasser bildet, keine unnötigen Fremdstoffe eingetragen werden und somit unnötige Wasserbelastung vermieden wird.

Zur Durchführung des erfindungsgemässen Verfahrens werden Behandlungslösungen verwendet, die salzsaure, wässrige Wasserstoffperoxidlösungen mit einem Gehalt von 0,05 bis 20 Gewichts-%, vorzugsweise 0,1 bis 3 Gewichts-% $H_2O_2$ enthalten. Die salzsaure Konzentration entspricht einer Normalität (N) von 0,001 N bis 6 N, vorzugsweise von 0,5 N bis 4,5 N, für normale übliche Anwendungen ganz besonders bevorzugt von 0,5 N bis 3 N, jeweils bezogen auf die im System enthaltenen Wasseranteile.

Bei der fabrikmässigen Herstellung vorbereiteter Behandlungslösungen werden diese noch mit üblichen, wirkungsverbessernden Zusätzen versetzt. So können derartige erfindungsgemässe wässrigsalzsaure Wasserstoffperoxid-Lösungen je nach Verwendungszweck auch mit üblichen Emulgatoren, Netzmitteln und Alkoholen sowie mit Stabilisatoren und Korrosionsinhibitoren der üblichen Arten kombiniert werden. Typische Zusammensetzungen enthalten beispielsweise in Mengen von jeweils zwischen 0,5 bis 3,0 Gewichts-% anionische und/oder kationische und/oder neutrale Detergentien, organische Säuren in Form von Carbonsäuren, Hydroxysäuren oder Sulfonsäuren, Netzmittel und/oder niedere aliphatische Alkohole.

Eine typische bevorzugte erfindungsgemässe Behandlungslösung besteht somit aus 6 bis 50 Gewichts-% 30 bis 33%ige Salzsäure, 0,05 bis 20 Gewichts-% Wasserstoffperoxid, 0,5 bis 3,0 Gewichts-% anionischen und/oder kationischen und/oder neutralen Detergentien, 0,5 bis 3,0 Gewichts-% organischen Carbonsäuren und/oder organischen Hydroxysäuren und/oder organischen Sulfonsäuren, 0,5 bis 3,0 Gewichts-% einem oder mehreren niederen aliphatischen Alkoholen und einem Rest bis 100 Gewichts-% Wasser. Ohne ihren Umfang zu begrenzen, wird die Erfindung nachfolgend anhand von Ausführungsbeispielen näher erläutert.

Beispiel 1

Ein kratzfester schwarzer Belag auf den Wänden eines Trinkwasserbehälters, der seit 1968 nicht behandelt worden war und der von halbkonzentrierter Salzsäure so gut wie nicht angegriffen wurde, bestehend aus einem hohen Gehalt an oxidischem Mangan, versintertem Kalk und wenig oxidischem Eisen, wurde pro Quadratmeter mit ca. 0,7 Litern einer 0,9 Gewichts-% Wasserstoffperoxid und 0,5 Gewichts-% eines Netzmittels auf der Basis Polyäthylenglykol in 2 N Salzsäure enthaltenden Behandlungslösung angesprüht. Der Belag verlor unter sofortiger Entfärbung seinen Zusammenhalt bereits während des Sprühvorgangs und wurde dabei zum grössten Teil weggespült. Eine unmittelbar anschliessende Wasserspülung entfernte alle noch verbliebenen Reste vollständig.

Beispiel 2

Ein etwa 6 Meter langes Wasserrohr, verockert mit vorwiegend eisen- und manganhaltigen Ablagerungen, wurde innerhalb ca. 30 Minuten mit einer Behandlungslösung, bestehend aus 3 Gewichts-% Wasserstoffperoxid, 0,8 Gewichts-% Netzmittel, 1,0 Gewichts-% Isopropanol in 3N Salzsäure, durchströmt. Es liess sich anschliessend mit Wasser freispülen. Ein kurzer zweiter Reinigungsgang mit der erfindungsgemässen Lösung mit anschliessender erneuter Wasserspülung entfernte alle beim ersten Mal noch verbliebenen Belagreste vollständig.

Beispiel 3

Ein konkretes Ausführungsbeispiel für eine gemäss der vorliegenden Erfindung verwendbare Behandlungslösung weist folgende Zusammensetzung auf:

0,5 bis 3,0 Gew.-% Wasserstoffperoxid
20 bis 48 Gew.-% 30- bis 33-gewichtsprozentige Salzsäure
0,5 bis 1,0 Gew.-% einer Mischung aus Polyglykoläthern
0,5 bis 1,0 Gew.-% einer Mischung aus Laurylpyridinium-bisulfat und Lauryldimethyl-benzylammoniumchlorid
2,5 bis 3,0 Gew.-% Zitronensäure
0,5 bis 1,0 Gew.-% Isopropylalkohol
Rest bis 100 Gew.-% Wasser

Eine solche Lösung kann industriell vorgefertigt werden und ist in grösseren Mengen haltbar. Bei einem Salzsäuregehalt von 30 bis 35 Gew.-% eignet sie sich besonders gut zur Behandlung normaler Inkrustationen, während höhere Säuregehalte gewählt werden können, wenn besonders hartnäckige, stark gealterte Inkrustationen zu behandeln sind.

Patentansprüche

1. Verfahren zur Entfernung von unter Beteiligung von Eisen- und Manganbakterien aus natürlichen Quellen gewonnenem Wasser aufgebauten eisen-, calcium- und manganhaltigen Verockerungen und/oder Versinterungen aus zur Wasserversorgung betriebenen Einrichtungen in Form von Brunnen, Leitungen und Trinkwasserreservoirs, dadurch gekennzeichnet, dass man eine wässrige Lösung bereitet, die eine solche Menge Salzsäure, dass die Normalität der Lösung von 0,001 N bis 6 N beträgt, sowie Wasserstoffperoxid in einer Menge von 0,05 bis 20 Gew.-% enthält, und diese Lösung auf die verockerten und/oder versinterten Einrichtungen einwirken lässt.

2. Verfahren nach Anspruch 1, dadurch gekennzeichnet, dass die Normalität der Salzsäure in der Lösung 0,5 bis 4,5 N beträgt und dass die Menge des Wasserstoffperoxids 0,1 bis 3 Gew.-% beträgt.

3. Verfahren nach Anspruch 1 oder 2, dadurch gekennzeichnet, dass die Lösung ausserdem in Mengen von jeweils zwischen 0,5 bis 3,0 Gew.-% anionische und/oder kationische und/oder neutrale Detergentien, organische Säuren, Netzmittel und/oder niedere aliphatische Alkohole enthält.

4. Verfahren nach einem der Ansprüche 1 bis 3, dadurch gekennzeichnet, dass man die Lösung als Lösung von Umgebungstemperatur auf die Verockerungen und/oder Versinterungen aufbringt.

5. Verfahren nach einem der Ansprüche 1 bis 4, dadurch gekennzeichnet, dass man die Lösung auf die verockerten und/oder versinterten Wände der zu behandelnden Einrichtungen aufsprüht.

6. Verfahren nach einem der Ansprüche 1 bis 4, dadurch gekennzeichnet, dass man die zu behandelnde Einrichtung mit der Lösung spült.

Claims

1. A process for the removal of iron-, calcium- and manganese-containing ochreous and sinter deposits from water supply installations in the form of wells, piping and storage tanks for potable water, which deposits are formed with the contribution of iron and manganese bacteria from water that originates from natural sources, characterized in that an aqueous solution is prepared which contains such an amount of hydrochloric acid that the concentration in the solution is from 0.001 N to 6 N, and hydrogen peroxide in an amount of from 0.05 to 20 percent by weight and this solution is applied to the incrustations in the installations.

2. The process according to Claim 1 characterized in that the concentration of the hydrochloric acid in the solution is from 0.5 to 4.5 N and the amount of hydrogen peroxide is from 0.1 to 3 percent by weight.

3. The process according to Claim 1 or 2 characterized in that the solution further contains anionic and/or cationic and/or neutral detergents, organic acids, wetting agents and/or lower aliphatic alcohols in amounts of between 0.5 and 3.0 percent by weight each.

4. The process according to any of Claims 1 to 3 characterized in that the solution is applied to the ochreous and sinter deposits in the form of a solution of environmental temperature.

5. The process according to any of Claims 1 to 4 characterized in that the solution is sprayed onto the ochreous and sinter deposits on the walls of the installations to be treated.

6. The process according to any of Claims 1 to 4 characterized in that the installations to be treated are rinsed with the solution.

Revendications

1. Procédé pour l'élimination de concrétions et/ou d'incrustations à base de calcium, de fer ou de manganèse que les bactéries métabolisant le fer et le manganèse produisent à partir de l'eau de sources naturelles, d'installations d'approvisionnement en eau sous la forme de fontaines, de conduites et de réservoirs d'eau potables, caractérisé en ce qu'il consiste à préparer une solution aqueuse qui contient une quantité telle d'acide chlorhydrique, que la normalité de cette solution se situe entre 0,001 N et 6 N, ainsi que du peroxyde d'hydrogène en quantité de 0,05 à 20% en poids, et laisser agir cette solution sur les parties des installations pourvues d'incrustations et/ou de concrétions.

2. Procédé suivant la revendication 1 caractérisé en ce que la normalité de l'acide chlorhydrique dans la solution se situe entre 0,5 N et 4,5 N, et que la quantité de peroxyde hydrogène se situe entre 0,1 et 3% en poids.

3. Procédé suivant la revendication 1 ou 2, caractérisé en ce que la solution contient également, en quantités chaque fois comprises entre 0,5 et 3,0% en poids, des détergents anioniques et/ou cationiques et/ou neutres, des acides organiques, des agents mouillants et/ou des alcools aliphatiques inférieurs.

4. Procédé suivant l'une des revendications 1 à 3, caractérisé en ce que la solution est appliquée à la température ambiante sur des incrustations et/ou des concrétions.

5. Procédé suivant l'une des revendications 1 à 4, caractérisé en ce que l'on pulvérise la solution sur les parois pourvues de concrétions et/ou d'incrustations, de l'installation à traiter.

6. Procédé suivant l'une des revendications 1 à 4 caractérisé en ce que l'installation à traiter est rincée avec la solution.